# EUROPÄISCHE PATENTANMELDUNG

(11) **EP 1 108 493 A2**
(43) Veröffentlichungstag der Anmeldung: **20.06.2001**
(21) Anmeldenummer: 00126174.2
(22) Anmeldetag: 30.11.2000
(51) Int. Cl.: B23K 11/30

(54) **Verfahren zum Wechseln einer Elektrodenkappe einer Schweisszange**

(30) Priorität: 17.12.1999 DE 19960877
(71) Anmelder: ABB PATENT GmbH, 68309 Mannheim (DE)
(72) Erfinder: Krämer, Jürgen, 64390 Erzhausen (DE)
(74) Vertreter: Miller, Toivo

(57) **Zusammenfassung**

Bei einem derartigen Verfahren wird die Schweißzange (2) mit einem Roboter (1) bewegt, wobei nach dem Entfernen der Elektrodenkappe (3) der Erfolg kontrolliert und die Schweißzange (2) mit einer neuen Elektrodenkappe bestückt wird. Zur Reduzierung des Zeitaufwandes beim Lösen und Entfernen der Elektrodenkappe (3) wird die Schweißzange (2) mit ihrer Elektrodenkappe (3) in den Spannbereich einer stationären Klemmeinrichtung (5) bewegt und in dieser Position geklemmt. Durch den Roboter wird jetzt eine gleichzeitige Dreh-und Ziehbewegung der Schweißzange um diebeziehungsweise entlang der Achse "Z" der Elektrodenkappe (3) ausgeführt.

## Beschreibung

Die Erfindung betrifft ein Verfahren zum Wechseln einer Elektrodenkappe einer Schweißzange, die mit einem Roboter bewegt wird, wobei nach dem Entfernen der Elektrodenkappe der Erfolg des Entfernungsvorganges kontrolliert und die Schweißzange mit einer neuen Elektrodenkappe bestückt wird.

Bei derartigen allgemein bekannten Verfahren bewegt der Roboter die Schweißzange in eine vorgebbare Position relativ zu einer Einrichtung zum Lösen einer Elektrodenkappe. Der Roboter mit der Schweißzange verbleibt in seiner eingenommenen stationären Position. Die Einrichtung zum Lösen und Entfernen der Elektrodenkappe verfügt über ein mechanisch aufwendiges Steuer-und Greifsystem, das wegen seiner vielen mechanisch ineinandergreifenden Teile störanfällig ist.

Je nach Art und Beschichtung des zu verschweißenden Materials müssen zum Beispiel in der Automobilindustrie in einem Turnus von 1 bis 3 Arbeitsschichten die Elektrodenkappen gewechselt werden. Der Wechselvorgang an sich dauert eine vorgebbare Zeit, die durch Störungen noch erhöht wird. Ein ungünstiger Wechselvorgang der Elektrodenkappen kann daher zu erheblichen Produktionsausfällen führen.

Es stellt sich die Aufgabe, ein Verfahren der eingangs genannten Art anzugeben, das den Zeitaufwand beim Wechselvorgang reduziert und mit weniger komplizierten Mitteln zu einem störungsfreien Ablauf beiträgt.

Gelöst wird diese Aufgabe erfindungsgemäß durch die im Anspruch 1 angegebenen Merkmale.

Danach wird zum Lösen und Entfernen der Elektrodenkappe die Schweißzange mit ihrer Elektrodenkappe in den Spannbereich einer stationären Klemmeinrichtung bewegt. Die Elektrodenkappe wird in dieser Position geklemmt. Durch den Roboter wird eine gleichzeitige Dreh-und Ziehbewegung der Schweißzange um die beziehungsweise zur Achse "Z" der Elektrodenkappe ausgeführt.

Da alle erforderlichen Roboterbewegungen frei programmierbar sind, ist eine einfache Anpassung der Bewegungsabläufe auf alle gängigen Elektrodenkappen und Schweißzangen möglich.

Vorzugsweise wird nach dem Lösen der Elektrodenkappe die Schweißzange aus dem Bereich der Klemmeinrichtung geschwenkt, die Backen werden auseinander bewegt und die nach unten fallenden Elektrodenkappe von einem unterhalb der Klemmeinrichtung angeordneten Behälter aufgefangen.

Anhand eines Ausführungsbeispieles und der schematischen Figuren 1 bis 2 wird das erfindungsgemäße Verfahren beschrieben.

### Dabei zeigt:

- Fig. 1: das Zusammenspiel zwischen Roboter, Schweißzange und Klemmeinrichtung und
- Fig. 2: den schematischen Ablauf des Verfahrens.

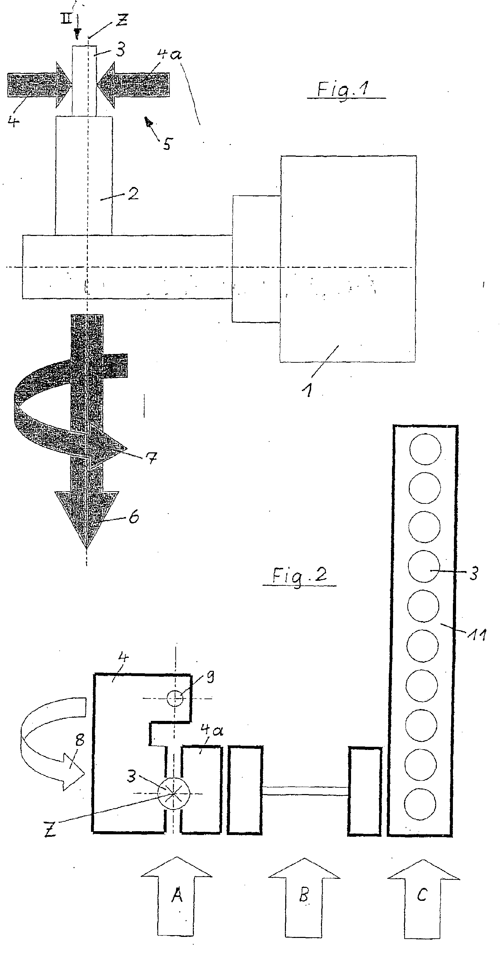

Die Fig. 1 deutet mit 1 einen Roboter an, der eine Schweißzange 2 trägt. Eine der Schweißzange zugeordnete Elektrodenkappe 3 muß in vorgebbaren Zeitabständen gewechselt werden. Hierzu bewegt der Roboter 1 die Schweißzange 2 in die in Fig. 1 gezeigte Position, wobei die Elektrodenkappe 3 zwischen zwei durch die Pfeile 4, 4a symbolisierten Backen einer stationären Klemmeinrichtung 5 angeordnet ist. Die Backen 4, 4a der Klemmeinrichtung 5 belegen die Elektrodenkappe 3 mit einer vorgebbaren Klemmkraft. Der Bewegungsablauf des Roboters ist nun so gewählt, daß während einer Drehbewegung um die Achse "Z" der Elektrodenkappe 3 gleichzeitig eine Ziehbewegung entlang dieser Achse "Z" in Pfeilrichtung 6 erfolgt. Mit der durch den Pfeil 7 angedeuteten Drehbewegung erfolgt ein Herausdrehen der Elektrodenkappe 3 aus der Schweißzange während die Bewegung in Achsrichtung die durch das Drehen veranlaßte Abwärtsbewegung der Elektrodenkappe kompensiert. Nach dem die Trennung der Elektrodenkappe 3 von der Schweißzange erfolgt ist, wird der Roboter mit der Schweißzange aus dem Bereich der Klemmeinrichtung 5 entfernt. Die Backen 4, 4a werden gelöst und die Elektrodenkappe 3 fällt in einen unterhalb der Klemmeinrichtung 5 angeordnete nicht dargestellten Auffangbehälter für verbrauchte Elektrodenkappen.

Die Fig. 2 zeigt den schematischen Ablauf des Verfahrens. In der Station A ist in einer Ansicht in Pfeilrichtung II der Fig. 1 die Elektrodenkappe 3 mit ihrer Achse ,,Z" zu erkennen. Ein Backenpaar 4, 4a der Klemmeinrichtung 5 nimmt die Elektrodenkappe 3 zwischen sich auf. In diesem Ausführungsbeispiel schwenkt der Backen 4, wie mit dem Pfeil 8 angedeutet, um einen Bolzen 9, während der Backen 4a in Pfeilrichtung 10 bewegt wird oder stationär angeordnet ist. Nach dem durch eine Drehbewegung um die Achse "Z" und eine Längsbewegung in Richtung der Achse ,,Z" die Elektrodenkappe 3 gelöst und durch Entfernen der Backen 4, 4 a die Elektrodenkappe in einen Auffangbehälter gelangt ist, wird in einem Kontrollbereich B überprüft, ob die Elektrodenkappe tatsächlich von der Schweißzange 2 entfernt ist. Es kann durch eine nicht dargestellte Lichtschranke, Fernsehkamera oder eine andere Kontrolleinrichtung erfolgen, in deren Sichtbereich die Schweißzange 2 mit Hilfe des Roboters 1 bewegt wird.

Nachdem der Erfolg des Entfernens der Elektrodenkappe überprüft ist, wird die Schweißzange 2 mit dem Roboter 1 in Position zu einem Magazin 11 einer Station C gebracht und die Bestückung der Schweißzange mit einer neuen Elektrodenkappe 3 vorgenommen. Der richtige Sitz der Elektrodenkappe 3 wird in der Station B geprüft, bevor die Schweißzange wieder zum Einsatz kommt.

## Patentansprüche

1. Verfahren zum Wechseln einer Elektrodenkappe (3) einer Schweißzange (2), die mit einem Roboter (1) bewegt wird, wobei nach dem Entfernen der Elektrodenkappe der Erfolg der Entfernungshandlung kontrolliert und die Schweißzange mit einer neuen Elektrodenkappe (3) bestückt wird, dadurch gekennzeichnet, daß die Schweißzange (2) mit ihrer Elektrodenkappe (3) zum Lösen und Entfernen der Elektrodenkappe in den Spannbereich einer stationären Klemmeinrichtung (5) bewegt wird, daß die Elektrodenkappe (3) in dieser Position geklemmt wird, und daß durch den Roboter (1) eine gleichzeitige Dreh-und Ziehbewegung der Schweißzange (2) um die -beziehungsweise entlang der Achse ,,Z" der Elektrodenkappe (3) ausgeführt wird.

2. Verfahren nach Anspruch 1, dadurch gekennzeichnet, daß nach dem Lösen der Elektrodenkappe (3) die Schweißzange (2) aus dem Bereich der Klemmeinrichtung (5) geschwenkt wird, daß die Backen (4, 4 a) auseinander bewegt werden und daß die nach unten fallende Elektrodenkappe (3) von einem Behälter aufgefangen wird.
